(19) Europäisches Patentamt
European Patent Office
Office européen des brevets

(11) **EP 2 948 749 B1**

(12) **EUROPÄISCHE PATENTSCHRIFT**

(45) Veröffentlichungstag und Bekanntmachung des Hinweises auf die Patenterteilung:
**15.03.2017 Patentblatt 2017/11**

(51) Int Cl.:
*G01M 17/02* (2006.01)     *G01N 23/18* (2006.01)
*G01N 23/04* (2006.01)     *G01M 17/03* (2006.01)

(21) Anmeldenummer: **14701477.3**

(22) Anmeldetag: **28.01.2014**

(86) Internationale Anmeldenummer:
**PCT/EP2014/000213**

(87) Internationale Veröffentlichungsnummer:
**WO 2014/114467 (31.07.2014 Gazette 2014/31)**

(54) **VERFAHREN ZUR KALIBRIERUNG EINER RÖNTGENPRÜFANLAGE FÜR EINEN REIFENTYP SOWIE VERFAHREN ZUR PRÜFUNG DER LAGE VON CORDS IN EINEM REIFEN**

METHOD FOR CALIBRATING AN X-RAY TESTING SYSTEM FOR A TIRE TYPE AND METHOD FOR CHECKING THE POSITION OF CORDS IN A TIRE

PROCÉDÉ D'ÉTALONNAGE D'UNE INSTALLATION DE VÉRIFICATION À RAYONS X POUR UN TYPE DE PNEU AINSI QUE PROCÉDÉ POUR LA VÉRIFICATION DE LA POSITION DE CÂBLES DANS UN PNEU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.01.2013 DE 102013001456**

(43) Veröffentlichungstag der Anmeldung:
**02.12.2015 Patentblatt 2015/49**

(73) Patentinhaber: **YXLON International GmbH 22419 Hamburg (DE)**

(72) Erfinder:
• **MELCHERT, Jürgen**
  **23843 Bad Oldesloe (DE)**
• **BAVENDIEK, Klaus**
  **22851 Norderstedt (DE)**

(74) Vertreter: **DTS Patent- und Rechtsanwälte Schnekenbühl und Partner mbB St.-Anna-Strasse 15 80538 München (DE)**

(56) Entgegenhaltungen:
**EP-A2- 0 315 099     EP-B1- 1 867 971 GB-A- 1 381 302**

**Beschreibung**

Die Erfindung befasst sich mit einem Verfahren zur Kalibrierung einer Röntgenprüfanlage für einen Reifentyp, die drei Komponenten aufweist, nämlich eine Röntgenröhre, einen zeilenförmigen Röntgendetektor sowie einen Manipulator für einen Reifen, wobei der Manipulator so angeordnet ist, dass der Reifen mit seiner Lauffläche zwischen Röntgenröhre und Röntgendetektor angeordnet ist. Darüber hinaus befasst sich die Erfindung mit einem Verfahren zur Prüfung der Lage von Cords in einem Reifen eines bestimmten Reifentyps mit einer Röntgenprüfanlage nach Durchführung eines erfindungsgemäßen Kalibrierungsverfahrens für diesen Reifentyp.

Heutige LKW- und PKW-Reifen haben eine feste Cord-Geometrie, die in Gummi eingebunden ist. Die Cords sind entweder als Metalldrähte oder aus Kunststofffasern. Um über die Güte eines einzelnen Reifens eine Aussage treffen zu können, muss für diesen Reifen im Einzelfall ermittelt werden, ob die vorbestimmte Geometrie der Cords auch realisiert ist oder Abweichungen hiervon gegeben sind. Relevant für die Bewertung der Qualität sind dabei sowohl die relative Lage der einzelnen Cords zueinander als auch die absolute Lage der Cords im Gummi, also beispielsweise ihres Abstandes zur Lauffläche des Reifens. Technologiebedingt werden bei unterschiedlichen Reifen die einzelnen Komponenten der Reifen mit unterschiedlichem Maßstab im Röntgenbild dargestellt. Die in der Röntgenprüfung von Reifen gültigen Prüfvorschriften beinhalten zum Teil Maßangaben. Um die Abweichung zu diesen Maßangaben ermitteln zu können, ist es erforderlich, das zur Prüfung verwendete Röntgenprüfsystem einmalig für den betreffenden Reifen zu kalibrieren. Zur Prüfung der Cords wird heutzutage regelmäßig ein Röntgendurchleuchtungsverfahren mit einem Zeilendetektor, der U-förmig ausgebildet ist und somit den Reifen über seine zwei Seitenwände und die Lauffläche umschließt, durchgeführt.

Wird ein spezifischer Reifentyp geprüft, so ist eine Kalibrierung der Prüfanlage nötig, die regelmäßig eine Röntgenröhre und einen Röntgendetektor umfasst, zwischen denen ein beweglicher Manipulator angeordnet ist, auf den der zu prüfende Reifen gespannt ist. Ein zweidimensionales Röntgenbild entsteht erst durch die Drehung des Reifens, während der Zeilendetektor getaktet ausgelesen wird.

Um eine aussagekräftige Einschätzung der Qualität der zu prüfenden Reifen des neuen Reifentyps vornehmen zu können, muss bei der Kalibrierung die Innen- und Außengeometrie dieses Reifentyps entweder abgeschätzt werden, was sehr ungenau ist, oder mit Hilfe von streifenförmigen Prüfkörpern, die über die Innen- und Außenwände gelegt werden, im Röntgendurchleuchtungsstrahl erfasst werden. Aus den dabei gewonnenen Ergebnissen kann bei der darauf folgenden Prüfung eines spezifischen Reifens die Lage der Cords nur abgeschätzt werden. Darüber hinaus ist diese Art der Kalibrierung sehr zeitintensiv. Außerdem muss eine solche Kalibrierung durch einen erfahrenen Operator erfolgen, da dieser eine optische Kontrolle vornehmen muss.

Nach der Kalibrierung der Röntgenprüfanlage auf einen neuen Reifentyp erfolgt die Prüfung der einzelnen Reifen beispielsweise gemäß der EP 1 867 971 B1 wie folgt. Die Röntgenröhre wird in einer ersten Position zum Reifen angeordnet und eine Durchleuchtung des Reifens vorgenommen. Dabei werden die Strahlen, die durch zwei bestimmte Punkte auf dem Reifen gehen, in einem Detektor bezüglich ihrer jeweiligen Koordinate erfasst. Im Anschluss daran wird die Röntgenröhre von ihrer ersten Position in eine zweite Position längs der Axialrichtung verfahren. Dort werden durch die vorher in der ersten Position schon erfassten zwei Punkte gehende Röntgenstrahlen erneut durch den Röntgendetektor bezüglich ihrer Koordinaten erfasst. Die tatsächlichen Koordinaten des ersten und des zweiten Punktes innerhalb des Reifens, deren Abbildung durch den Detektor erfolgt sind, wird über geometrische Betrachtungen erhalten, indem die jeweiligen Schnittgeraden der Röntgenstrahlen, die durch sie hindurch gehen von den beiden Positionen der Röntgenröhre und den jeweils zugeordneten Koordinaten am Detektor erhalten werden. Darauf folgend wird der reale Abstand zwischen diesen beiden Punkten innerhalb des Reifens berechnet und es erfolgt eine Umwandlung der Länge zwischen dem ersten und dem zweiten Punkt auf dem Bild in einen realen Abstand zwischen dem ersten und dem zweiten Punkt.

Aus der EP 0 315 099 A2 ist eine Vorrichtung zur Röntgenprüfung von Reifen und ein Kalibrierverfahren dieser Vorrichtung bekannt, bei dem die Röntgendetektoren für einen bestimmten Reifentyp in eine Kalibrierposition gefahren werden. Die Kalibrierung dient zur Einstellung der Empfindlichkeit der Detektoren, um später eine zuverlässige Messung zu ermöglichen.

Aus der GB 1 381 302 A ist ein Verfahren zur Untersuchung der internen Struktur eine Reifens bekannt, bei dem zur Lagebestimmung von Cords in dem Reifen Stereo-Röntgenbilder des Reifens aufgenommen werden, wobei eine Referenz-Metallprobe mit Zähnen verschiedener Länge in die Reifenlauffläche eingeführt werden.

Aufgabe der Erfindung ist es, die bislang zeitintensive Einrichtung für einen neuen Reifentyp zu verkürzen und im darauf folgenden Prüfungsverfahren die Bestimmung der Geometrie der Cordlagen im Reifen zu ermöglichen.

Erfindungsgemäß wird die Aufgabe durch ein Kalibrierungsverfahren mit den Merkmalen des Patentanspruchs 1 gelöst. Dadurch, dass lediglich während einer kontinuierlichen Bewegung einer der drei Komponenten Röntgenröhre, Röntgendetektor oder Manipulator eine fortlaufende Aufnahme von Röntgendurchleuchtungsbildern im Röntgendetektor stattfindet, erfolgt eine zeitsparende Ermittlung der "Wanderung" der Cords in den zeitlich aufeinander folgenden Röntgendurchleuchtungsbildern, wobei die "Wanderung" eines einzelnen Cords zwischen zwei Aufnahmen nachvollziehbar gemacht wird. Dadurch ist eine zusätzliche Abschätzung der Geometrie beziehungsweise ein Anbringen von streifenförmigen Prüfkörpern auf der Innen- beziehungsweise Außenwand des Reifens nicht mehr nötig. Durch ein solches Kalibrierungsverfahren stehen sämtliche Informationen zur Verfügung, um nachfolgend eine sehr schnelle und zuverlässige Prüfung der Cordlagen einer Vielzahl von Reifen des fraglichen Reifentyps durchzuführen. Da es sich bei dem Detektor um einen Zeilendetektor handelt, entsteht ohne Drehung des Reifen nur eine Aneinanderreihung von hellen und dunklen Punkten in einer Zeile. Zur Bestimmung der Lage eines einzelnen Cords - ein dunkler Punkt im Röntgendurchleuchtungsbild - kann die Verschiebung in Durchleuchtungsrichtung einer der drei Komponenten Röntgenröhre, Röntgendetektor oder Manipulator mit Reifen zur Bestimmung der absoluten Lage des Cords verwendet werden. Will man nun einen bestimmten Punkt - also einen Cord - verfolgen, der sich auf Grund der Verschiebung in Durchleuchtungsrichtung einer der drei genannten Komponenten entlang der Detektorzeile verschiebt, so ist dieser Punkt von Bildeinzug zu Bildeinzug zu verfolgen. Wird die Verfahrgeschwindigkeit in Relation zur Ausleserate des Zeilendetektors geeignet gewählt, kann die Wanderung des Cords von Detektorelement zu Detektorelement sicher verfolgt werden.

Eine vorteilhafte Weiterbildung der Erfindung sieht vor, dass die bewegte Komponente der Manipulator ist. Aufgrund der geometrischen Verhältnisse - insbesondere der Änderung der Vergrößerung - ist eine solche Bewegung des Manipulators dazu geeignet, dass die "Wanderung" eines einzigen Cords bei der Abbildung auf den Röntgendetektor möglichst groß ist - im Vergleich zu den beiden anderen Möglichkeiten der Bewegung des Röntgendetektors oder der Röntgenröhre - und somit zu einer guten Nachverfolgbarkeit der "Wanderung" der Cords in den Röntgendurchleuchtungsbildern in zeitlicher Abfolge führt.

Eine weitere vorteilhafte Weiterbildung der Erfindung sieht vor, dass die Bewegung der Komponente über einen Verfahrweg von 50 bis 200 mm, bevorzugt 100 mm, erfolgt. Ein solcher Verfahrweg ist ausreichend, um eine gute Erkennbarkeit der "Wanderung" der Cords vorzunehmen und gleichzeitig kurz genug, um möglichst wenig Zeit für die Kalibrierung zu benötigen.

Eine weitere vorteilhafte Weiterbildung der Erfindung sieht vor, dass der Verfahrweg senkrecht zur Lauffläche des Reifens verläuft. Dies stellt eine einfache Verfahrung dar, die mit einem Teil der bislang schon verwendeten Prüfvorrichtungen durchgeführt werden kann.

Eine weitere vorteilhafte Weiterbildung sieht vor, dass die Ausleserate 0,1 bis 10 ms, bevorzugt 0,5 ms, beträgt. Eine solche Ausleserate führt dazu, dass eine gute Verfolgbarkeit der einzelnen Cords in den aufeinander folgenden eingezogenen Röntgendurchleuchtungsbildern möglich ist.

Eine weitere vorteilhafte Weiterbildung der Erfindung sieht vor, dass die Geschwindigkeit der Bewegung der Komponente 1 bis 2 m/min, bevorzugt 1,5 m/min, beträgt. Eine solche Geschwindigkeit ist mechanisch gut zu realisieren und mit bekannten Prüfvorrichtungen schon auszuführen, so dass auf diese zurückgegriffen werden kann. Darüber hinaus wird gewährleistet, dass in Kombination mit einer vertretbaren Ausleserate genügend Röntgendurchleuchtungsbilder eingezogen werden können, um eine sehr gute Nachverfolgung der "Wanderung" der Cords zu ermöglichen.

Die Aufgabe wird auch durch ein Verfahren zur Prüfung der Lage von Cords in einem Reifen eines bestimmten Reifentyps gemäß Patentanspruch 7 gelöst. Dadurch, dass vor der Prüfung der Lage der Cords das oben beschriebene erfindungsgemäße Kalibrierungsverfahren durchgeführt wird, muss nur noch ein einziges Röntgendurchleuchtungsbild in einer bestimmten Position des jeweiligen Reifens aufgenommen werden, um anhand der im Kalibrierungsverfahren gewonnenen Werte auf die absolute Lage der Cords innerhalb des Reifens schließen zu können. In der Durchleuchtungsprüfung von Reifen entsteht das Röntgendurchleuchtungsbild durch die Rotation des Reifens zwischen der Röntgenröhre und dem Zeilendetektor, der getaktet ausgelesen wird. Durch die Aneinanderreihung der einzelnen Zeilenbilder entsteht ein zweidimensionales Röntgenbild als Abwicklung des Reifens. Das Röntgenbild stellt den Reifen als Streifen in Rollrichtung dar. Durch die vorangegangene Kalibrierung (Ermittlung des Vergrößerungsmaßstabes) ist es möglich, die einzelnen Reifendetails maßlich zu erfassen. Nun können zum Beispiel die Abstände der Cords zueinander in einer Längenmaßeinheit angegeben werden. Dies vereinfacht die Durchführung der Prüfung immens und bringt eine Zuverlässigkeit der Prüfung der Cordlagen mit sich, die über die bislang vorgenommenen Prüfungsverfahren hinausgeht.

Bevorzugt wird das Röntgendurchleuchtungsbild für die Prüfung des jeweiligen Reifens entweder in der Anfangsposition oder der Endposition der beweglichen Komponente aufgenommen. Ein Anfahren jeder dieser beiden genannten Positionen ist besonders einfach möglich, da die sich bewegende Komponente lediglich an einen ihrer beiden Endanschläge gefahren werden muss. Dadurch ist auch eine sehr exakte Bestimmung der Position möglich und somit auch eine äußerst zuverlässige Prüfung aufgrund des sehr genau festzulegenden Vergleichs mit den im vorangegangenen Kalibrierungsverfahren gewonnenen Daten.

Weitere Vorteile und Einzelheiten der Erfindung werden anhand der in den Figuren dargestellten Ausführungsbeispiele näher beschrieben. Es zeigen:

Figur 1     eine schematische Teilschnittdarstellung einer Röntgenprüfanlage mit Reifen, wobei die Röntgenröhre in ihrer Anfangsposition ist,

Figur 2 die Röntgenprüfanlage gemäß Figur 1 mit der Rönt-genröhre in ihrer Endposition,

Figur 3 eine Darstellung einer anderen Prüfanlage vergleichbar Figur 1 mit verfahrbarem Detektor in seiner Anfangsposition,

Figur4 die Röntgenprüfanlage gemäß Figur 3 mit dem Detektor in seiner Endposition,

Figur 5 eine Darstellung einer weiteren Röntgenprüfanlage vergleichbar Figur 1 mit verfahrbarem Manipulator, wobei sich der am Manipulator festgelegte Reifen in seiner Anfangsposition befindet,

Figur 6 die Röntgenprüfanlage gemäß Figur 5 mit dem Manipulator in seiner Endstellung und

Figur 7 eine Skizze zur Verdeutlichung der geometrischen Verhältnisse und zur Berechnung der Vergrößerung.

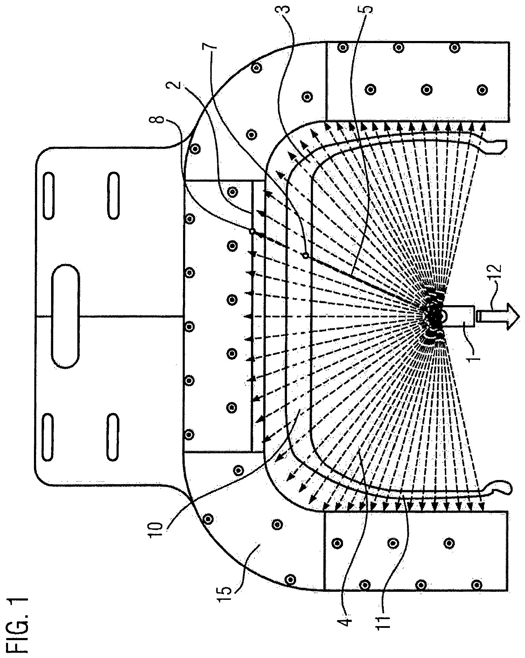

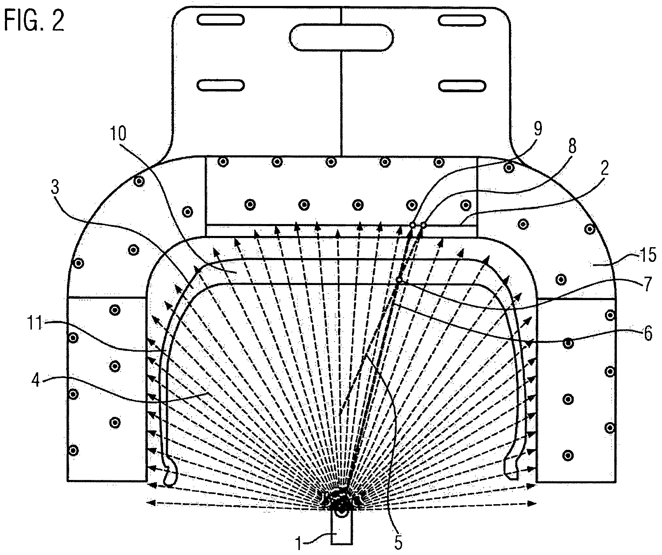

In den Figuren 1 und 2 sind die Extrempositionen einer Röntgenröhre 1 eines ersten Ausführungsbeispiels eines erfindungsgemäßen Verfahrens dargestellt. Die zur Durchführung des Kalibrierungsverfahrens dargestellte Röntgenprüfanlage weist neben der Röntgenröhre 1 einen Röntgendetektor 2 auf. Der im Ausführungsbeispiel dargestellte Röntgendetektor 2 ist als Zeilendetektor ausgebildet und befindet sich in einem Gehäuse 15. Aus Übersichtlichkeitsgründen ist der Röntgendetektor 2 nur in dem oberen Teil des Gehäuses 15, das in der Zeichnung horizontal verläuft, dargestellt. Tatsächlich erstreckt sich der Röntgendetektor 2 jedoch auch über die beiden U-förmigen Seitenschenkel die vertikal verlaufen sowie die zwischen vertikalen und horizontalen Elementen angeordneten gebogenen Bereiche. Ein solcher Detektortyp ist aus dem Stand der Technik bekannt, so dass seine nähere Ausgestaltung nicht weiter beschrieben werden muss. Dies gilt auch für die sich an den Röntgendetektor 2 anschließenden Auswerteeinheiten.

Zwischen der Röntgenröhre 1 und dem Röntgendetektor 2 ist ein Reifen 3 angeordnet, der auf einem Manipulator (nicht gezeigt) festgelegt ist. Mittels dieses Manipulators ist es zumindest möglich, einen auf ihm befestigten Reifen 3 um seine Mittelachse zu drehen, wobei die Mittelachse diejenige Achse ist, um die der Reifen 3 (samt Felge, auf die sie im Gebrauchszustand aufgezogen sind) später am Fahrzeug rotiert. Diese Mittelachse ist nicht dargestellt und verläuft im Ausführungsbeispiel horizontal in der Zeichenebene. Um die Erfindung gut darstellen zu können, ist der Reifen 3 nur im Bereich seiner Lauffläche 10 sowie seiner Seitenwände 11 dargestellt, wobei dieser Bereich in einem Schnitt dargestellt ist.

Innerhalb des Gummis des Reifens 3 sind sowohl im Bereich seiner Lauffläche 10 als auch im Bereich seiner Seitenwände 11 Cords 7 aus Metalldrähten angeordnet. Aus Übersichtlichkeitsgründen ist lediglich ein einziger Cord 7 im Bereich der Lauffläche 10 des Reifens 3 dargestellt. Dem Fachmann ist es jedoch durchaus geläufig, wie die Cordlagen innerhalb des Gummis des Reifens 3 verlaufen.

Die von der Röntgenröhre 1 im Ausführungsbeispiel fächerförmig emittierte Röntgenstrahlung 4 durchdringt den Reifen 3 und wird im Detektor 2 erfasst, wobei dadurch ein Röntgendurchleuchtungsbild des Reifens 3 in der dargestellten Schnittebene erfolgt.

Um eine Aussage darüber treffen zu können, ob die Cords 7 bei einem spezifischen Reifentyp an den gewollten Positionen sind, muss die Röntgenprüfanlage auf jeden Reifentyp spezifisch kalibriert werden. Nur dann ist es möglich, etwas über die Qualität des Reifens 3 im Hinblick auf die Lage und Geometrie der Cords 7 auszusagen. Die Notwendigkeit jeweils einer Kalibrierung auf jeden Reifentyp ergibt sich aus mehreren Gesichtspunkten: Reifen 3 können verschiedene Größen, verschiedene Querschnittsgeometrien, verschiedene Dicken im Bereich der Lauffläche 10 sowie der Seitenwände 11 aufweisen, die Lage und die Geometrie der Cords 7, die im Normalfall zu Cordbändern zusammengefasst sind, können verschieden angeordnet beziehungsweise ausgebildet sein, etc.

Erfindungsgemäß erfolgt die Kalibrierung dadurch, dass die Röntgenröhre 1 von ihrer in Figur 1 dargestellten Anfangsposition entlang der Bewegungsrichtung 12 senkrecht nach unten, d.h. auch senkrecht zur Lauffläche 10 des Reifens 3, bis in seine in Figur 2 dargestellte Endposition verfahren wird und dabei gleichzeitig fortlaufend Aufnahmen von Röntgendurchleuchtungsbildern des Reifens 3 im Röntgendetektor 2 erstellt werden und diese dann eingezogen werden, um sie danach datentechnisch zu verarbeiten.

Um eine Kalibrierung vornehmen zu können, ist es bei dem erfindungsgemäßen Verfahren notwendig, das Bild eines spezifischen Cords 7 am Röntgendetektor 2 während der gesamten Verfahrung der Röntgenröhre 1 entlang der Bewegungsrichtung 12 mit zu verfolgen, so dass am Ende des Verfahrvorgangs sowohl das Bild 8 des Cords 7 in der Anfangsposition der Röntgenröhre 1 (siehe Figur 1) als auch sein Bild 9 in der Endposition der Röntgenröhre 1 (siehe Figur 2) bekannt sind. Die Bestimmung des Abstandes zwischen diesen beiden Bildern 8, 9 ist nur möglich, wenn man den spezifischen Cord 7 bezüglich seines Bildes 8, 9 während der gesamten Verfahrung der Röntgenröhre 1 verfolgen und immer eine Zuordnung des Röntgenbildes zu diesem vornehmen kann.

In Figur 2 ist sowohl der Röntgenstrahl 6 in der Endposition der Röntgenröhre 1 dargestellt (der in dieser Figur durch den spezifischen Cord 7 geht) als auch der Röntgenstrahl 5 in der Anfangsposition der Röntgenröhre 1 gemäß Figur 1. Dadurch kann man gut erkennen, welcher Abstand zwischen den beiden Bildern 8, 9 des Cords 7 in der Anfangsposition und der Endposition vorliegt. Aufgrund der Geometrie der gesamten Röntgenprüfanlage, also der Bestandteile derselben zueinander und den Positionen der Röntgenröhre 1, insbesondere deren Anfangsposition und deren Endposition, kann auf die Lage des Cords 7 innerhalb des Gummis des Reifen 3 sowohl in vertikaler als auch in horizontaler Richtung gemäß der Darstellung in Figuren 1 und 2 zurück geschlossen werden. Die Position der Röntgenröhre 1 und des Röntgendetektors 2 sind durch die Konstruktion bekannt. Damit ist der Abstand zueinander ebenfalls bekannt. Der Verfahrweg des Objektes - Cord im Reifen - ist ebenfalls durch die Konstruktion beziehungsweise durch entsprechende elektromechanische Messsysteme bekannt. Aus der Pixelgröße des Röntgendetektors 2 und der Wanderung des Cords 7 als Abbildung auf dem Röntgendetektor 2 lässt sich der Weg der Wanderung in ein Längenmaß umrechnen. Damit stehen ausreichend Informationen zur Verfügung, den Abstand des Objektes - Cord 7 im Reifen - zum Röntgendetektor 2 zu errechnen. Mit dieser Information und der bekannten Pixelgröße des Röntgendetektors 2 lassen sich im Röntgenbild Elemente in der Cordebene im Reifen 3 genau vermessen.

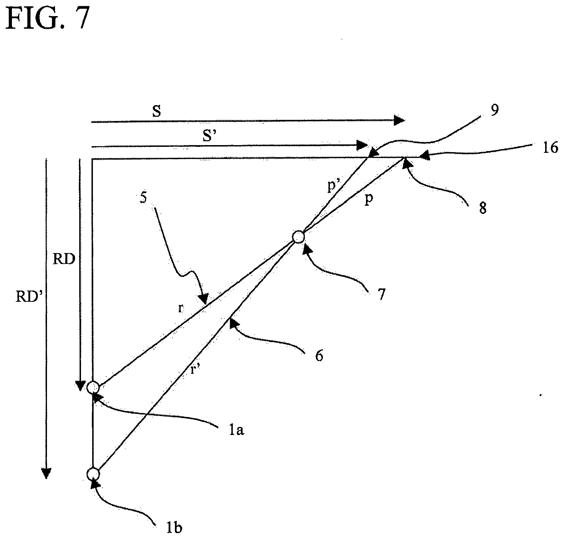

Die vorstehend beschriebenen Bedingungen ergeben sich - dies ist für den Fachmann anhand der Beziehungen, die in Figur 7 dargestellt sind, auch ohne näher hier darauf eingehen zu müssen, klar - als Formel für die Vergrößerung:

$$\frac{r + p}{r} = \frac{S' * RD - S * RD'}{S' * RD - S' * RD'}$$

Dabei bedeuten: r realer Fokus-Objekt-Abstand mit Röntgenröhre 1 in Anfangsposition 1a; r' realer Fokus-Objekt-Abstand mit Röntgenröhre 1 in Endposition 1b; p realer Objekt-Detektor-Abstand mit Röntgenröhre 1 in Anfangsposition 1a; p' realer Objekt-Detektor-Abstand mit Röntgenröhre 1 in Endposition 1b; RD Abstand der Röntgenröhre 1 in Anfangsposition 1a zur Detektorebene 16; RD' Abstand der Röntgenröhre 1 in Endposition 1b zur Detektorebene 16; S Entfernung des Bildes 8 des Cords 7 in Anfangsposition zum Koordinatenursprung; S' Entfernung des Bildes 9 des Cords 7 in Endposition zum Koordinatenursprung.

Der (bekannte) Röntgenzeilendetektor, der als der Röntgendetektor 2 verwendet wird, weist Detektorelemente auf, die regelmäßig eine bestimmte definierte Größe - hier von ca. 0,5 mm - haben. Von dieser Breite der Detektorelemente hängt die Auflösung des Röntgenzeilendetektors ab. Diese Auflösung hängt darüber hinaus von der Pixelbreite auf dem Bildschirm ab, an dem das Röntgendurchleuchtungsbild beobachtet wird. Das Bild eines Detektorelements kann immer nur entweder schwarz oder weiß sein, je nachdem, ob an seiner Position gerade ein Cord 7 im Strahlengang der Röntgenröhre 1 ist oder nicht. Bei einer größeren Vergrößerung können auch zwei oder mehr Detektorelemente einen einzelnen Cord 7 darstellen.

Aufgrund dieser Gegebenheiten ist es bei einer ausreichend hohen Ausleserate des Röntgendetektors 2 möglich, die Wanderung des Bildes 8, 9 des spezifischen Cords 7 nachzuvollziehen, da der Ort, an dem das Detektorelement ein schwarzes Bild wiedergibt, das also dem spezifischen Cord 7 entspricht, im darauf folgenden Röntgendurchleuchtungsbild höchstens um ein Detektorelement weiter gewandert ist oder gegebenenfalls auch noch im selben Detektorelement liegt. Um eine solche Nachverfolgung des spezifischen Cords 7 zu ermöglichen, liegt die Ausleserate im Bereich von 0,5 ms bei einer Bewegungsgeschwindigkeit der Röntgenröhre 1 in Bewegungsrichtung 12 von ca. 1,5 m/min. Der Verfahrweg der Röntgenröhre 1 von ihrer in Figur 1 dargestellten Anfangsposition in ihre in Figur 2 dargestellte Endposition beträgt ca. 100 mm, so dass sich eine Verfahrzeit von ca. 4 Sekunden ergibt. Dadurch ist es möglich, aufgrund der Hell-Dunkel-Information der einzelnen Detektorelemente und ihrer Abfolge die Verfolgung des spezifischen Cords 7 in den Röntgendurchleuchtungsbildern durchzuführen.

Da bei der Kalibrierung auf einen neuen Reifentyp mehr Zeit zur Verfügung steht, als später bei der Prüfung eines einzelnen Reifens 3 (hier muss ein möglichst hoher Durchsatz erhalten werden), ist die Verfahrzeit von 4 Sekunden kein allzu störendes Problem. Durch die während des erfindungsgemäßen Kalibrierungsverfahrens erhaltenen Informationen ist es im Anschluss daran bei der Prüfung der einzelnen Reifen 3 möglich, einen sehr hohen Durchsatz zu erhalten, da nur noch ein einziges Röntgendurchleuchtungsbild des Reifens 3 in jeder zu prüfenden Winkelposition nötig ist. Aufgrund der Abbildung des konkreten Röntgendurchleuchtungsbilds bei der Prüfung kann anhand der beim erfindungsgemäßen Kalibrierungsverfahren erhaltenen Daten auf die Lage und die Geometrie der Cords 7 rückgeschlossen werden und somit in äußerst kurzer Prüfzeit eine Aussage über die Qualität des gerade geprüften Reifens 3 gemacht werden.

Bei dem ersten Ausführungsbeispiel gemäß den Figuren 1 und 2, bei dem während der Kalibrierung die Röntgenröhre 1 in Bewegungsrichtung 12 verfahren wird, verschiebt sich im Laufe des Verfahrens der Röntgenröhre 1 nach unten das Bild 8, 9 eines Cords 7, der in den Abbildungen rechts von der Mitte der Lauffläche 10 liegt, nach links. Der dabei erzielte Abstand zwischen dem Bild 8 des Cords 7 in der Anfangsposition der Röntgenröhre 1 und dem Bild 9 des Cords 7 in der Endposition der Röntgenröhre 1 ist dabei proportional zum Weg der Röntgenröhre 1 multipliziert mit der Differenz aus eingestellter Vergrößerung minus 1. Für senkrechte auf die Lauffläche 10 stehende Röntgenstrahlen erfolgt aus geometrischen Gründen keine Verschiebung.

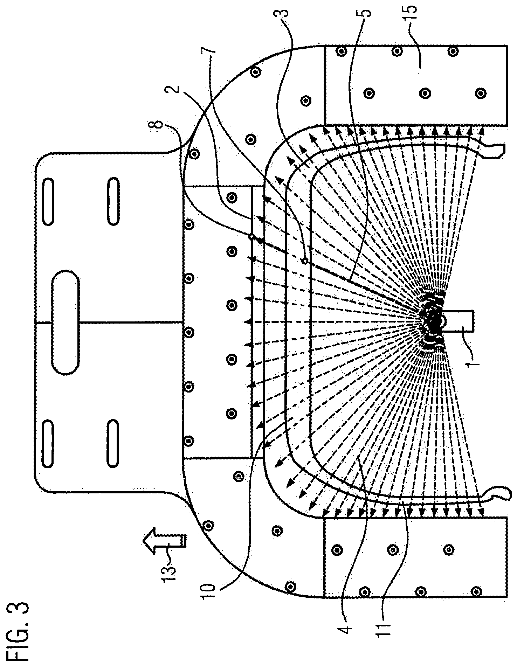

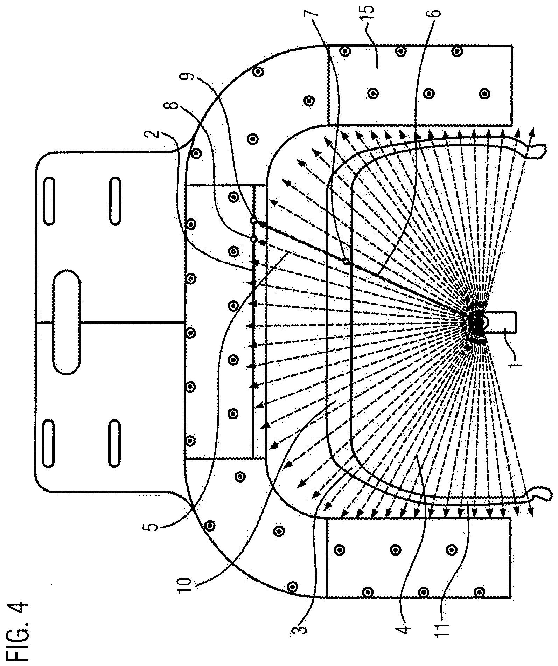

Die Kalibrierung erfolgt beim erfindungsgemäßen zweiten Ausführungsbeispiel gemäß den Figuren 3 und 4 prinzipiell gleich wie im ersten Ausführungsbeispiel der Figuren 1 und 2. Der Unterschied zwischen dem ersten Ausführungsbeispiel und dem zweiten Ausführungsbeispiel liegt darin, dass anders als beim ersten Ausführungsbeispiel nicht die Röntgenröhre 1 verfahren wird, sondern der Detektor 2 entlang einer Bewegungsrichtung 13, die senkrecht zur Lauffläche 10 des Reifens 3 - in den Figuren vertikal nach oben - gerichtet ist. Wie insbesondere der Figur 4 zu entnehmen ist, in der sowohl der Röntgenstrahl 5 in der Anfangsposition des Röntgendetektors 2 als auch der Röntgenstrahl 6 in der Endposition des Röntgendetektors 2 samt dazu gehöriger Bilder 8, 9 des Cords 7 dargestellt sind, ergibt sich hier jedoch, dass für einen Cord 7, der rechts der Mitte der Lauffläche 10 angeordnet ist, eine Verschiebung seines Bildes 8,9 nach rechts erfolgt. Außerdem ist die Gesamtverschiebung des Bildes 8, 9 des Cords 7 zwischen Anfangsposition und Endposition des Röntgendetektors 2 größer als im ersten Ausführungsbeispiel. Die Verschiebung ist dabei proportional zur Differenz der eingestellten Vergrößerung minus 1. Da die Vergrößerung im Regelfall dicht an 1 liegt, bringt die Bewegung des Röntgendetektors eine größere Verschiebung, als wenn die Röntgenröhre 1 um den gleichen Weg verschoben wird.

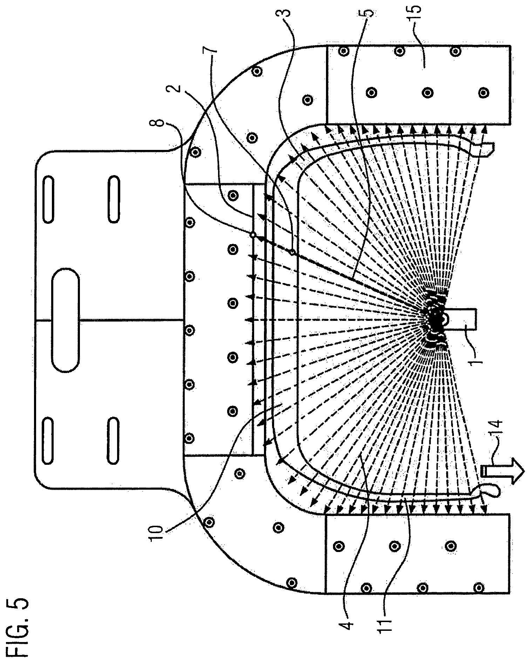

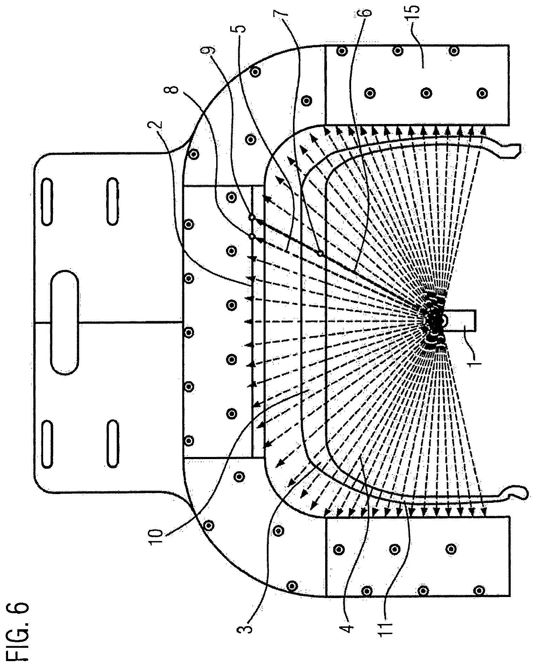

Eine noch größere Verschiebung des Bildes 8, 9 des Cords 7 erhält man, wenn man gemäß dem dritten Ausführungsbeispiel der Figuren 5 und 6 sowohl die Röntgenröhre 1 als auch den Röntgendetektor 2 an ihren Plätzen belässt und den Manipulator und somit den Reifen 3 zwischen Röntgenröhre 1 und Röntgendetektor 2 bewegt.

In Figur 5 ist der Reifen 3 in seiner Anfangsposition sehr nahe am Röntgendetektor 2 dargestellt. Der Röntgenstrahl 5 durch den Cord 7 erzeugt dabei auf dem Röntgendetektor 2 das Bild 8.

Es erfolgt eine Verfahrung des (nicht dargestellten) Manipulators und somit des Reifens 3 entlang der Bewegungsrichtung 14, also senkrecht zur Lauffläche 10 des Reifens 3 in der Vertikalen nach unten, bis die Position des Reifens 3 gemäß Figur 6 erreicht ist.

In Figur 6 ist sowohl der Röntgenstrahl 5 in der Anfangsposition als auch der Röntgenstrahl 6 in der Endposition durch den Cord 7 dargestellt. Wie bei dem zweiten Ausführungsbeispiel der Figuren 3 und 4 bei Verschiebung des Röntgendetektors 2 wandert auch bei der Verschiebung des Manipulators gemäß dem dritten Ausführungsbeispiel der Figuren 5 und 6 ein sich rechts von der Mitte der Lauffläche 10 befindlicher Cord 7 nach rechts. Allerdings ist bei demselben Verfahrweg die Verschiebung zwischen den Bildern 8, 9 des Cords 7 zwischen Anfangposition und Endposition des Manipulators/Reifens 3 noch größer als im zweiten Ausführungsbeispiel. Die Verschiebung ist hierbei ungefähr proportional zur eingestellten Vergrößerung.

Die Erfindung lässt sich im Hinblick auf das Kalibrierungsverfahren wie folgt kurz zusammenfassen: Die Verschiebung eines Bildes 8, 9 eines Cords 7 ist kaum nur anhand von zwei Bildern in den Endpositionen der verschobenen Einheit (Röntgenröhre 1, Röntgendetektor 2 oder Manipulator/Reifen 3) zu ermitteln, da es sehr viele Cords 7 in dem Reifen 3 gibt und eine eindeutige Zuordnung der Cords 7 vom Bild 8 in der Anfangsposition und im Bild 9 der Endposition nahezu unmöglich ist. Daher wird erfindungsgemäß bei stillstehendem Reifen (damit ist gemeint, dass der Reifen 3 nicht rotiert - eine lineare Bewegung, wie zum dritten Ausführungsbeispiel der Figuren 5 und 6 beschrieben, fällt nicht hierunter) die Bewegung einer der drei oben genannten Komponenten vorgenommen und es werden während der gesamten Bewegung Röntgendurchleuchtungsbilder eingezogen. Bei diesen Röntgendurchleuchtungsbildern, die mittels des Zeilendetektors aufgenommen werden, werden einige im Röntgendurchleuchtungsbild per Mausklick ausgewählte Cords 7 (in den oben beschriebenen Ausführungsbeispielen ist zur besseren Verdeutlichung jeweils nur auf einen Cord 7 Bezug genommen) über die Lauffläche 10 sowie die Seitenwände 11 für die Verfolgung in der Bildsequenz herangezogen. Da das Auslesen des Röntgendetektors 2 signifikant schneller als die Bewegung der jeweiligen Einheit erfolgt, ist die Verschiebung in den Bildern 8, 9 des Cords 7 sehr klein. Aufgrund der kleinen Änderungen von Röntgendurchleuchtungsbild zu Röntgendurchleuchtungsbild gehen die Cords 7 in der Sequenz nicht verloren. Zu den jeweils herangezogenen Cords 7 wird somit die Lage im Bild 8 in der Anfangsposition und im Bild 9 in der Endposition ermittelt. Daraus wird die Verschiebung (zum Beispiel orthogonal zur Reifenoberfläche) errechnet. Cords 7, die im zweiten Ausführungsbeispiel - also bei der Verschiebung des Detektors 2 - dichter an der Oberfläche der Lauffläche 10 - also der Außenseite des Reifens 3 - liegen, werden weniger stark verschoben, als Cords 7, die dichter an der Innenseite liegen. Aus den Verschiebungen der jeweils verfolgten Cords 7 kann somit die Lage der Cords 7 sowie die Geometrie des Reifens 3 errechnet werden.

Bezugszeichenliste

| 1 | Röntgenröhre |
|---|---|
| 1a | Anfangsposition der Röntgenröhre |
| 1b | Endposition der Röntgenröhre |
| 2 | Röntgendetektor |
| 3 | Reifen |
| 4 | Röntgenstrahlung |
| 5 | Röntgenstrahl in Anfangsposition |
| 6 | Röntgenstrahl in Endposition |
| 7 | Cord |
| 8 | Bild des Cords in Anfangsposition |
| 9 | Bild des Cords in Endposition |
| 10 | Lauffläche |
| 11 | Seitenwand |
| 12 | Bewegungsrichtung der Röntgenquelle |
| 13 | Bewegungsrichtung des Röntgendetektors |
| 14 | Bewegungsrichtung des Manipulators |
| 15 | Gehäuse |
| 16 | Detektorebene |

**Patentansprüche**

1. Verfahren zur Kalibrierung einer Röntgenprüfanlage für einen Reifentyp, die drei Komponenten aufweist, nämlich eine Röntgenröhre (1), einen zeilenförmigen Röntgendetektor (2) sowie einen Manipulator für einen Reifen (3), wobei der Manipulator so angeordnet ist, dass der Reifen (3) mit seiner Lauffläche (10) zwischen Röntgenröhre (1) und Röntgendetektor (2) angeordnet ist,
wobei bei dem Verfahren eine der Komponenten entlang eines Verfahrwegs von einer festgelegten Anfangsposition in eine festgelegte Endposition bewegt wird und während der Bewegung eine fortlaufende Aufnahme von Röntgendurchleuchtungsbildern von Cords (7) innerhalb des Reifens (3) erfolgt, mit einer vorgebbaren Ausleserate, wobei die einzelnen Cords (7) anhand zeitlich aufeinander folgender Röntgendurchleuchtungsbilder verfolgt werden und anhand der daraus ermittelten Gesamtverschiebung der Cords (7) in den Röntgendurchleuchtungsbildern zwischen der Anfangsposition und der Endposition sowie anhand der bekannten geometrischen Daten auf die absolute Lage der Cords (7) innerhalb des Reifens (3) geschlossen wird.

2. Verfahren nach Patentanspruch 1, wobei die bewegte Komponente der Manipulator ist.

3. Verfahren nach einem der vorstehenden Patentansprüche, wobei die Bewegung der Komponente über einen Verfahrweg von 50 bis 200 mm, bevorzugt 100 mm, erfolgt.

4. Verfahren nach einem der vorstehenden Patentansprüche, wobei der Verfahrweg senkrecht zur Lauffläche (10) des Reifens (3) verläuft.

5. Verfahren nach einem der vorstehenden Patentansprüche, wobei die Ausleserate 0,1 bis 10 ms, bevorzugt 0,5 ms, beträgt.

6. Verfahren nach einem der vorstehenden Patentansprüche, wobei die Geschwindigkeit der Bewegung der Komponente 1 bis 2 m/min, bevorzugt 1,5 m/min, beträgt.

7. Verfahren zur Prüfung der Lage von Cords (7) in einem Reifen (3) eines bestimmten Reifentyps in einer Röntgenprüfanlage nach Durchführung eines Kalibrierungsverfahrens für diesen Reifentyp gemäß einem der vorstehenden Patentansprüche, wobei zur Prüfung nur ein Röntgendurchleuchtungsbild des zu prüfenden Reifens (3) in einer bestimmten Position der beweglichen Komponente aufgenommen wird und dieses mit den aus dem Kalibrierungsverfahren gewonnenen Werten verglichen wird und daraus auf die absolute Lage der Cords (7) innerhalb des Reifens (3) geschlossen wird.

8. Verfahren nach Patentanspruch 7, wobei das Röntgendurchleuchtungsbild in der Anfangsposition oder der Endposition der beweglichen Komponente aufgenommen wird.

**Claims**

1. Method for calibrating an x-ray testing system for a tyre type, which comprises three components, namely an x-ray tube (1), a linear x-ray detector (2) and a manipulator for a tyre (3), wherein the manipulator is arranged in such a way that the tyre (3) is arranged with the tread (10) thereof between x-ray tube (1) and x-ray detector (2),
wherein, in the method, one of the components is moved along a travel path from a defined initial position to a defined end position and, during the movement, continuous recording of x-ray images of cords (7) within the tyre (3) is carried out at a pre-definable reading rate, wherein the individual cords (7) are tracked by using chronologically successive x-ray images
and conclusions are drawn about the absolute position of the cords (7) within the tyre (3) by using the total displacement of the cords (7) in the x-ray images, determined from the latter, between the initial position and the end position, and by using the known geometric data.

2. Method according to claim 1, wherein the moved component is the manipulator.

3. Method according to one of the preceding claims, wherein the movement of the component takes place over a travel path of from 50 to 200 mm, preferably 100 mm.

4. Method according to one of the preceding claims, wherein the travel path runs perpendicular to the tread (10) of the tyre (3).

5. Method according to one of the preceding claims, wherein the reading rate is 0.1 to 10 ms, preferably 0.5 ms.

6. Method according to one of the preceding claims, wherein the speed of the movement of the component is 1 to 2 m/min, preferably 1.5 m/min.

7. Method for checking the position of cords (7) in a tyre (3) of a specific tyre type in an x-ray testing system following the performance of a calibration method for this tyre type in accordance with one of the preceding claims, wherein, for the purpose of checking, only one x-ray image of the tyre (3) to be checked is recorded in a specific position of the moving component and said x-ray image is compared with the values obtained from the calibration method and, from this, conclusions are drawn about the absolute position of the cords (7) within the tyre (3).

8. Method according to claim 7, wherein the x-ray image is recorded in the initial position or the end position of the moving component.

**Revendications**

1. Procédé d'étalonnage d'une installation de vérification à rayons X pour un type de pneu, comportant trois composants, notamment un tube à rayons X (1), un détecteur de rayons X (2) en forme de lignes ainsi qu'un manipulateur pour un pneu (3), le manipulateur étant disposé de telle sorte que le pneu (3) est disposé avec sa surface de roulement (10) entre le tube à rayons X (1) et le détecteur de rayons X (2) ; sachant que dans le procédé, un des composants est déplacé le long d'une course allant d'une position de départ déterminée à une position de fin déterminée et que pendant le mouvement, une prise continue d'images radioscopiques à rayons X de câbles (7) est effectuée à l'intérieur du pneu (3), avec une vitesse de lecture prédéfinissable ;
les câbles (7) individuels étant suivis à l'aide d'images radioscopiques à rayons X se suivant dans le temps ; et
la position absolue des câbles (7) à l'intérieur du pneu (3) étant déduite à l'aide du déplacement total déterminé à partir de là des câbles (7) dans les images radioscopiques à rayons X entre la position de départ et la position de fin ainsi qu'à l'aide des données géométriques connues.

2. Procédé selon la revendication 1, le composant déplacé étant le manipulateur.

3. Procédé selon l'une quelconque des revendications précédentes, le mouvement du composant se produisant sur une course de 50 à 200 mm, de façon préférée de 100 mm.

4. Procédé selon l'une quelconque des revendications précédentes, la course s'étendant perpendiculairement à la surface de roulement (10) du pneu (3).

5. Procédé selon l'une quelconque des revendications précédentes, la vitesse de lecture étant de 0,1 à 10 ms, de façon préférée de 0,5 ms.

6. Procédé selon l'une quelconque des revendications précédentes, la vitesse de déplacement du composant étant de 1 à 2 m/min, de façon préférée de 1,5 m/min.

7. Procédé de vérification de la position de câbles (7) dans un pneu (3) d'un type de pneu déterminé dans une installation de vérification à rayons X après mise en oeuvre d'un procédé d'étalonnage pour ce type de pneu selon une des revendications précédentes, sachant que pour la vérification, seule une image radioscopique à rayons X du pneu (3) à vérifier est prise dans une position déterminée du composant mobile et que cette image est comparée à des valeurs acquises à partir du procédé d'étalonnage et que l'on en déduit la position absolue des câbles (7) à l'intérieur du pneu (3).

8. Procédé selon la revendication 7, l'image radioscopique à rayons X étant prise dans la position de départ ou dans la position de fin du composant mobile.

FIG. 1

FIG. 2

EP 2 948 749 B1

FIG. 3

FIG. 4

FIG. 5

FIG. 6

# FIG. 7

**IN DER BESCHREIBUNG AUFGEFÜHRTE DOKUMENTE**

**In der Beschreibung aufgeführte Patentdokumente**

- EP 1867971 B1
- EP 0315099 A2
- GB 1381302 A